# EUROPÄISCHE PATENTANMELDUNG

(11) **EP 1 067 647 A2**
(43) Veröffentlichungstag der Anmeldung: **10.01.2001**
(21) Anmeldenummer: 00250215.1
(22) Anmeldetag: 29.06.2000
(51) Int. Cl.: H02H 5/10, H02H 11/00, H02J 7/00

(54) **Schaltungsanordnung zum Schutz vor Verpolungsschäden**

(30) Priorität: 06.07.1999 DE 19931021
(71) Anmelder: Volkswagen AG, 38436 Wolfsburg (DE)
(72) Erfinder: Rech, Bernd Dr., 38437 Tiddische-Hoitlingen (DE); Lübke, Andreas, 38442 Wolfsburg (DE); Zawade, Torsten, 31228 Peine (DE); Ende, Jens, 38442 Wolfsburg (DE); Ertzsänger, Frank, 38442 Wolfsburg (DE); Rennert, Ingo, 38539 Müden/Aller (DE); Hentschel, Robert, 38118 Braunschweig (DE)
(74) Vertreter: Effert, Bressel und Kollegen

(57) **Zusammenfassung**

Es wird eine Schaltungsanordnung zum Schutz von elektrischen Verbrauchern (R1, R2) vor Verpolungsschäden in einem Bordnetz mit wenigstens zwei unterschiedlichen Bordnetzspannungen (U1, U2) vorgeschlagen, bei der zu den elektrischen Verbrauchern (R2), die an die höhere Bordnetzspannung (U2) angeschlossen sind, jeweils ein steuerbarer Schalter (S2) in Reihe geschaltet ist. Der steuerbare Schalter (S2) wird im Fehlerfall, wenn eine zu starke Abweichung vom Nennstrom des elektrischen Verbrauchers (R2) festgestellt wird, geöffnet, so daß dieser elektrische Verbraucher (R2) von der zugehörigen Bordnetzspannung (U2) abgeschaltet ist.

## Beschreibung

Die Erfindung betrifft eine Schaltungsanordnung zum Schutz von elektrischen Verbrauchern vor Verpolungsschäden gemäß Oberbegriff des Anspruchs 1.

Die bekannten Schaltungsanordnungen, mit denen elektrische Verbraucher gegen Überspannungen oder zu hohe Verpolspannungen geschützt werden, verwenden häufig Spannungsbegrenzer, die parallel zu dem jeweiligen elektrischen Verbraucher wirksam sind. Eine solche Schaltungsanordnung ist aus der DE 197 19 919 A1 bekannt, bei der zum Schutz von Verbrauchern vor Verpolungsschäden in einem Bordnetz eines Kraftfahrzeugs ein parallel zum Bordnetz geschaltetes Begrenzungselement angeordnet ist, welches bei falsch gepolter Spannung die Bordnetzspannung auf einen vorgegebenen Wert begrenzt.

Aus der DE 195 01 985 A1 ist als Verpolschutz ebenfalls ein als Diode ausgebildetes Begrenzerelement parallel zu den zu schützenden Verbrauchern angeordnet. Bei einer Verpolung wird die Diode durchlässig, wodurch die parallel geschalteten Verbraucher geschützt werden.

Als Verpolschutz sind auch Schaltungsanordnungen bekannt, die in Reihe zu den zu schützenden elektrischen Einrichtungen Halbleiterelemente vorsehen, die nur bei richtig angelegter Spannung durchlässig sind. Im Falle einer Verpolung sperren die Halbleiterelemente und wirken somit als Verpolschutz. Eine solche Schaltungsanordnung ist in der DE 196 40 272 A1 beschrieben.

In Kraftfahrzeugen, die ein Bordnetz mit einer ersten niedrigen und einer zweiten höheren Bordnetzspannung besitzen, sind die elektrischen Verbraucher beider Bordnetzspannungen wenigstens teilweise über gemeinsame Masseverbindungen an einer gemeinsame Masse angeschlossen. Im Falle einer Unterbrechung der Masseverbindung kann dies zu einer Verpolung der Verbraucher, die an die niedrigere Bordnetzspannung angeschlossen sind,. führen

Der Erfindung liegt die Aufgabe zugrunde, eine Schaltungsanordnung zu schaffen, die in einem Bordnetz mit unterschiedlichen Bordnetzspannungen elektrische Verbraucher gegen Verpolungsspannungen, die bei einer Unterbrechung gemeinsamer Masseverbindungen auftreten können, schützt.

Die Lösung dieser Aufgabe erhält man durch die im Anspruch 1 angegebenen Merkmale. Der durch einen an die höhere Bordnetzspannung angeschlossenen elektrischen Verbraucher fließende Strom wird gemessen und dann abgeschaltet, wenn der gemessene Strom vom Nennstrom des elektrischen Verbrauchers unzulässig stark abweicht. Auf diese Weise wird sichergestellt, daß von der Spannungsquelle des Bordnetzes mit höherer Bordnetzspannung keine verpolte Spannung auf einen Verbraucher gelangen kann, der an die niedrigere Bordnetzspannung angeschlossen ist. Im Fehlerfall tritt ein vom Nennstrom abweichender Strom auf, der erkannt wird, so daß die zugehörige höhere Bordnetzspannung von dem entsprechenden elektrischen Verbraucher abgeschaltet werden kann. Außerdem kann ein den Strom überwachender Prozessor dabei feststellen, wo im Bordnetz ein Fehlerfall aufgetreten ist. Die Fehlerortung und die Behebung eines aufgetretenen Fehlers werden dadurch erheblich erleichtert.

Um im Fehlerfall den Stromkreis zu dem elektrischen Verbraucher, der an einer höheren Bordnetzspannung angeschlossen ist, unterbrechen zu können, wird vorzugsweise ein steuerbarer Schalter in Reihe zu den elektrischen Verbrauchern des Bordnetzes mit höherer Spannung geschaltet. Im Fehlerfall kann der jeweils entsprechende Schalter von dem Prozessor betätigt und dadurch der Strom unterbrochen werden.

Die Messung des Stroms kann beispielsweise sehr einfach mittels jeweils einem in Reihe zu den elektrischen Verbrauchern liegenden niederohmigen Meßwiderstand erfolgen.

Ist der elektrische Schalter Teil einer elektrischen Steuereinrichtung, die zur Steuerung des zugehörigen elektrischen Verbrauchers dient, so kann die Messung des Stroms auch intern in der elektrischen Steuerung erfolgen, so daß im Fehlerfall diese Steuerung den zugeordneten elektrischen Verbraucher von der zugehörigen höheren Bordnetzspannung abschaltet.

Schließlich besteht auch grundsätzlich die Möglichkeit, die elektrischen Verbraucher, die an die niedrigere Bordnetzspannung angeschlossen sind, mit entsprechenden elektrischen Schutzeinrichtungen auszustatten. Dies könnte dann zweckmäßig sein, wenn bereits ohnehin entsprechende Schalt- und Steuereinrichtungen diesen elektrischen Verbrauchern zugeordnet sind, so daß praktisch ohne zusätzlichen schaltungstechnischen Aufwand entsprechende Schutzschaltungen im Verbraucherstromkreis mit der niedrigeren Bordnetzspannung zusätzlich realisiert werden können.

Typische Spannungswerte für ein Bordnetz mit zwei unterschiedlichen Bordnetzspannungen sind als niedrige Bordnetzspannung 14 Volt und als höhere Bordnetzspannung 42 Volt.

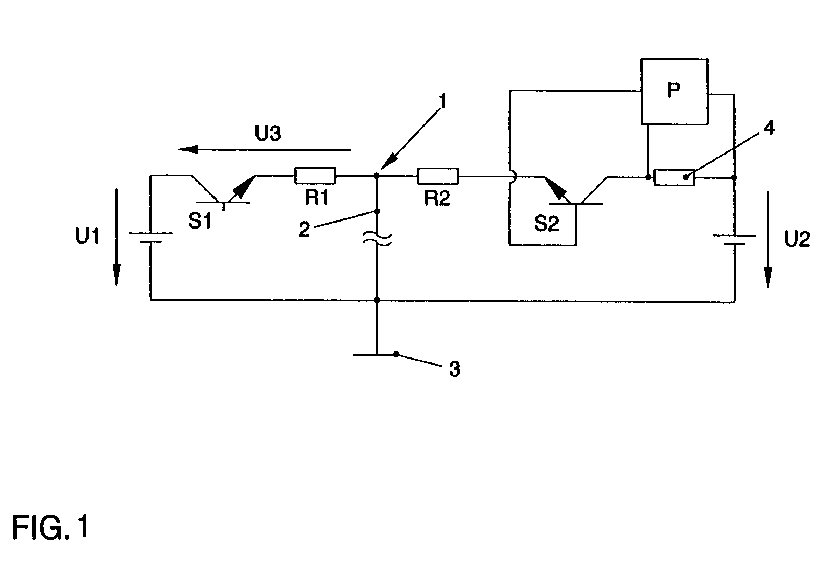

Die Erfindung wird nachfolgend anhand eines in der Zeichnung dargestellten Ausführungsbeispiels näher erläutert.

In der Zeichnung ist eine Schaltungsanordnung dargestellt, bei der zwei elektrische Verbraucher R1 und R2 an unterschiedliche Bordnetzspannungen U1 und U2 angeschlossen sind. Die niedrigere Bordnetzspannung U1 kann beispielsweise 14 Volt betragen, während die höhere Bordnetzspannung U2 42 Volt hat. Die beiden elektrischen Verbraucher R1 und R2 sind an einen gemeinsamen Masse-Verbindungspunkt 1 angeschlossen, der über eine für beide Verbraucher R1, R2 gemeinsame Masseverbindung 2 mit der Masse 3 verbunden ist, Im vorliegenden Fall ist jedoch die Masseverbindung 2 unterbrochen, was hier mit zwei Wellenlinien angedeutet ist.

Die beiden elektrischen Verbraucher R1 und R2 sind jeweils mit einem zugehörigen steuerbaren Schalter S1 bzw. S2 in Reihe geschaltet. Am Schalter S2 ist zusätzlich ein Meßwiderstand 4 angeordnet, der einen sehr niedrigen Widerstandswert hat und lediglich zur Strommessung dient. Zu diesem Zweck greift ein Prozessor P den am Meßwiderstand 4 auftretenden Spannungsabfall ab und ermittelt daraus den durch den Verbraucher R2 fließenden Strom. Weicht der gemessene Strom von dem Nennstrom des Verbrauchers R2 unzulässig ab, so veranlaßt der Prozessor P, daß der Schalter S2 den Verbraucher R2 von der Bordnetzspannung U2 abschaltet.

Bei einer Unterbrechung der Masseverbindung 2 verändern sich die Spannungsverhältnisse an den Verbrauchern R1 und R2 in der Weise, daß bei geschlossenen Schaltern S1 und S2 und bei einem am Meßwiderstand 4 zu vernachlässigenden Spannungsabfall über beiden Verbrauchern R1 und R2 die Differenzspannung U2-U1 anliegt. Dies kann zur Folge haben, daß am Verbraucher R1 eine unzulässig große Verpolungsspannung U3 anliegt, die zu einem Defekt im Verbraucher R1 führen könnte. Die erfindungsgemäße Schaltungsanordnung verhindert jedoch das Auftreten einer unzulässig großen Verpolungsspannung U3, da der Prozessor P den Schalter S2 öffnet, wenn ein Fehlerfall auftritt, wie dies bei einer Unterbrechung der Masseverbindung 2 der Fall ist. Die Unterbrechung der Masseverbindung 2 hat nämlich zur Folge, daß aufgrund der sich ändernden Spannungsverhältnisse an den Verbrauchern R1 und R2 der Strom durch den Verbraucher R2 so stark vom Nennstrom abweicht, daß der Prozessor P dies als Fehlerfall erkennt und den Schalter S2 sofort öffnet, d. h. der Verbraucher R2 wird von der Bordnetzspannung U2 abgeschaltet.

Das Prinzip der erfindungsgemäßen Schaltungsanordnung ist grundsätzlich nicht auf ein Bordnetz mit zwei unterschiedlichen Bordnetzspannungen beschränkt, da entsprechende Schutzeinrichtungen auch in einem Bordnetz mit mehreren unterschiedlichen Bordnetzspannungen grundsätzlich denkbar sind.

### BEZUGSZEICHENLISTE

- 1: Masse-Verbindungspunkt
- 2: Masseverbindung
- 3: Masse
- 4: Meßwiderstand
- R1, R2: elektrische Verbraucher
- U1, U2: Bordnetzspannungen
- S1, S2: steuerbare Schalter
- P: Prozessor
- U2-U1: Differenzspannung
- U3: Verpolungsspannung

## Patentansprüche

1. Schaltungsanordnung zum Schutz von elektrischen Verbrauchern (R1, R2) vor Verpolungsschäden in einem Bordnetz mit wenigstens zwei unterschiedlichen Bordnetzspannungen (U1, U2), bei dem die an unterschiedliche Bordnetzspannungen angeschlossenen Verbraucher (R1, R2) gemeinsame Masseverbindungen (2) verwenden,
dadurch gekennzeichnet, daß
der durch einen an die höhere Bordnetzspannung (U2) angeschlossenen elektrischen Verbraucher (R2) fließende Strom gemessen wird, und daß dieser Verbraucher (R2) von der höheren Bordnetzspannung (U2) abgeschaltet wird, wenn der gemessene Strom vom Nennstrom des an die höhere Bordnetzspannung angeschlossenen elektrischen Verbrauchers (R2) unzulässig stark abweicht.

2. Schaltungsanordnung nach Anspruch 1,
dadurch gekennzeichnet, daß
zu den elektrischen Verbrauchern (R1, R2) des Stromkreises mit der höheren Bordnetzspannung (U2) jeweils ein steuerbarer Schalter (S2) in Reihe geschaltet ist, und daß der Schalter von einem Prozessor (P), der die Ströme durch die an die höhere Bordnetzspannung (U2) angeschlossenen elektrischen Verbraucher (R2) mißt, betätigbar ist.

3. Schaltungsanordnung nach einem der Ansprüche 1 oder 2,
dadurch gekennzeichnet, daß
der Strom an einem jeweils zu den an die höhere Bordnetzspannung (U2) angeschlossenen elektrischen Verbrauchern (R2) in Reihe liegenden niederohmigen Meßwiderstand (4) gemessen wird.

4. Schaltungsanordnung nach einem der vorhergehenden Ansprüche,
dadurch gekennzeichnet, daß
das Bordnetz eine erste Bordnetzspannung (U1) von 14 Volt und eine zweite, höhere Bordnetzspannung (U2) von 42 Volt aufweist.

5. Schaltungsanordnung nach einem der Ansprüche 2 bis 4,
dadurch gekennzeichnet, daß
die steuerbaren Schalter (S2) Bestandteil von den an die höhere Bordnetzspannung (U2) angeschlossenen elektrischen Verbrauchern (R2) zugeordneten elektrischen Steuereinrichtungen sind, die intern den Strom zu dem jeweiligen elektrischen Verbraucher (R2) feststellen.

6. Schaltungsanordnung nach einem der vorhergehenden Ansprüche,
dadurch gekennzeichnet, daß
den an die niedrigere Bordnetzspannung (U1) angeschlossenen elektrischen Verbrauchern (R1) wenigstens teilweise steuerbare Schalter (S1) vorgeschaltet sind, die bei einer festgestellten Verpolung und/oder bei einem zu hohen Stromfluß den oder die betroffenen Verbraucher (R1) abschalten.
